# EUROPÄISCHE PATENTSCHRIFT

(11) **EP 2 278 084 B1**
(45) Veröffentlichungstag und Bekanntmachung des Hinweises auf die Patenterteilung: **15.02.2012**
(21) Anmeldenummer: 09007988.0
(22) Anmeldetag: 18.06.2009
(51) Int. Cl.: E04B 1/58, F16B 7/04, E02B 17/00, E02B 17/02

(54) **Offshore-Anordnung und Verfahren zur Installation einer Offshore-Anordnung**
Method for installing an offshore facility and offshore facility
Agencement en mer et procédé d'installation d'un agencement en mer

(43) Veröffentlichungstag der Anmeldung: 26.01.2011
(73) Patentinhaber: Overdick GmbH & co. KG, 20457 Hamburg (DE)
(72) Erfinder: Rosponi, Andreas, 22607 Hamburg (DE)
(74) Vertreter: Hauck Patent- und Rechtsanwälte

(56) Entgegenhaltungen:
- EP-A- 0 487 515
- US-A- 4 090 798
- US-A- 4 812 080
- US-A- 4 854 779

## Beschreibung

Die Erfindung betrifft eine Offshore-Anordnung, umfassend eine auf dem Meeresboden installierte Gründungsstruktur mit mindestens drei über eine Stützkonstruktion verbundenen vertikalen Hüllrohren, die jeweils mit einem Stützfuß auf dem Meeresboden aufstehen und durch die jeweils ein in den Meeresboden getriebener Rammpfahl verläuft, wobei die Rammpfähle zumindest an ihren oberen Enden hohl ausgebildet sind, weiter umfassend eine zumindest teilweise oberhalb des Meeresspiegels angeordnete Tragstruktur mit mindestens drei zu den Hüllrohren und den Rammpfählen ausgerichteten vertikalen Stützbeinen, die zumindest an ihrem unteren Ende ebenfalls hohl sind. Die Erfindung betrifft außerdem ein Verfahren zur Installation einer Offshore-Anordnung.

Derartige Offshore-Anordnungen besitzen Tragstrukturen mit beispielsweise einer oberhalb des Meeresspiegels angeordneten Plattform. Auf dieser Plattform können weitere Strukturen angeordnet sein, beispielsweise Öl- oder Gasförderanlagen. Die Anordnung kann somit eine Öl- oder Gasförderinsel bilden. Zunehmend werden aber auch andere Bauwerke auf solchen Tragstrukturen installiert, z.B. Windenergieanlagen. Die Gründungsstruktur (auch: Jacket) dient zum einen zur Verankerung der Anordnung auf dem Meeresboden. Zum anderen soll sie von der Tragstruktur bzw. den darauf angeordneten Bauwerken ausgehende Lasten in den Meeresboden ableiten. Dazu muss die Tragstruktur mit der Gründungsstruktur sicher verbunden werden, beispielsweise verschweißt werden. Die Verbindung erfolgt zumeist unterhalb des Meeresspiegels, was die Montage erschwert.

Als nächstkommenden Stand der Technik ist aus US 4 812 080 eine Offshore-Anordnung bekannt, mit einer Gründungsstruktur mit gegenüber einer Vertikalen schräg angeordneten Stützbeinen und mehreren Hüllrohren für in den Meeresboden einzutreibende Rammpfähle. Aus US 4 854 779 ist weiterhin eine Offshore-Plattform bekannt, die ebenfalls gegenüber einer Vertikalen geneigte Stützbeine umfasst. Dabei wird ein unterer Teil einer Gründungsstruktur mit einem oberen Teil einer Gründungsstruktur verbunden. Hierzu sind Anschlussstifte vorgesehen. Der Erfindung liegt die Aufgabe zugrunde, eine Offshore-Anordnung der eingangs genannte Art bzw. ein Verfahren der eingangs genannten Art bereitzustellen, wobei die Offshore-Anordnung in einfacher, schneller und damit kostengünstiger Weise installiert werden kann und gleichzeitig die im Betrieb auftretenden Lasten sicher in den Meeresboden ableiten kann.

Für eine Offshore-Anordnung der eingangs genannten Art löst die Erfindung die Aufgabe dadurch, dass die Stützbeine und die in den Hüllrohren verlaufenden Rammpfähle jeweils über einen Verbindungsstopfen miteinander verbunden sind, der mit seinem einen Ende in dem oberen Ende eines Rammpfahls und mit seinem anderen Ende in dem unteren Ende des zu dem Rammpfahl jeweils ausgerichteten Stützbeins steckt. Die Tragstruktur der Anordnung ist vorzugsweise schwimmfähig und kann z.B. eine Plattform aufweisen, auf der weitere Strukturen angeordnet werden können, beispielsweise eine Öl- oder Gasförderanlage, jedoch auch z.B. eine Windenergieanlage oder ähnliches. Während die Plattform der Tragstruktur üblicherweise oberhalb des Meeresspiegels angeordnet ist, ragen die Stützbeine bis unterhalb des Meeresspiegels und die Verbindung der Stützbeine mit den Rammpfählen der Gründungsstruktur ist vorzugsweise unterhalb des Meeresspiegels angeordnet. Die Gründungsstruktur (Jacket) weist dabei in an sich bekannter Weise mehrere Hüllrohre auf, die mittels der Stützkonstruktion, beispielsweise über geeignete Verbindungsstreben, weitgehend momentensteif miteinander verbunden sind. Über die in den Meeresboden eingetriebenen Rammpfähle werden die Hüllrohre auf dem Meeresboden gegründet.

Erfindungsgemäß ist jeder Rammpfahl mit dem ihm zugeordneten Stützbein der Tragstruktur über einen Verbindungsstopfen verbunden. Die Verbindungsstopfen bzw. Verbindungsstifte haben eine Funktion ähnlich wie Verbindungsdübel. Sie stellen in besonders einfach und schnell und damit kostengünstig zu installierender Weise eine sichere Verbindung der Tragstruktur mit der Gründungsstruktur sicher. Insbesondere werden durch die erfindungsgemäßen Verbindungsstopfen von der Tragstruktur ausgehende Lasten sicher in die Rammpfähle und von diesen in den Meeresboden abgeleitet. Neben in vertikaler Richtung auftretenden Kräften werden von der erfindungsgemäßen Verbindung der Stützbeine mit den Rammpfählen insbesondere auch in horizontaler Richtung auftretende Kräfte sicher aufgenommen.

Die Verbindungsstopfen erstrecken sich dabei jeweils über einen erheblichen Bereich sowohl in die Stützbeine als auch in die Rammpfähle hinein. So können sie sich beispielsweise jeweils über eine Länge von mehr als einem Meter, vorzugsweise mehr als zwei Metern oder mehr als drei Metern, in die Stützbeine und in die Rammpfähle erstrecken. Die Stopfen können einen Durchmesser von mehr als einem Meter, vorzugsweise etwa zwei Metern besitzen. Abhängig von den Dimensionen der Anordnung und den im Betrieb auftretenden Anforderungen können selbstverständlich andere Abmessungen gewählt werden. Die Pfähle können zumindest an ihrem oberen Ende rohrförmig (und nach oben offen) ausgebildet sein. Ebenso können die Stützbeine an ihrem unteren Ende rohrförmig (und nach unten offen) ausgebildet sein. Die Pfähle und die Stützbeine können also eine zylindrische Grundform besitzen. Die Stützbeine können entsprechend koaxial zu den Rammpfählen und damit auch den Hüllrohren ausgerichtet sein. Die Verbindungsstopfen können ebenfalls eine zylindrische Grundform besitzen.

Die Offshore-Anordnung kann insbesondere jeweils vier Hüllrohre, Rammpfähle, Stützbeine und Verbindungsstopfen aufweisen. Zumindest die tragenden Bauteile des erfindungsgemäßen Offshore-Bauwerks können aus einem hochwertigen Stahlwerkstoff, beispielsweise Stahlgüte S355 oder höher, bestehen.

Die Verbindungsstopfen weisen jeweils einen Abstandhalter auf, mit dem die durch die Verbindungsstopfen verbundenen Stützbeine und Rammpfähle jeweils auf Abstand zueinander gehalten werden. Die Abstandhalter beabstanden die Stützbeine und Rammpfähle in vertikaler Richtung zueinander. Sie können z.B. in Längsrichtung der Stopfen etwa mittig an deren Außenfläche angeordnet sein. Die Abstandhalter können jeweils eine obere in radialer Richtung von den Verbindungsstopfen vorstehende ringförmige Anlagefläche und eine untere in radialer Richtung von den Verbindungsstopfen vorstehende ringförmige Anlagefläche aufweisen, wobei die Stützbeine jeweils mit ihrem unteren Ende an der oberen Anlagefläche anliegen und die Rammpfähle jeweils mit ihrem oberen Ende an der unteren Anlagefläche anliegen. Die obere und untere Anlagefläche jedes Abstandhalters definieren also den Abstand zwischen dem jeweiligen Paar aus Stützbein und Rammpfahl. Nach einer weiteren besonders praxisgemäßen Ausgestaltung kann vorgesehen sein, dass die Abstandhalter jeweils mindestens zwei in Längsrichtung der Verbindungsstopfen beabstandete und über mehrere in Längsrichtung der Verbindungsstopfen verlaufende Verstärkungsrippen verbundene Ringflansche aufweisen, wobei der obere der Ringflansche mit seiner Oberseite die obere Anlagefläche bildet und der untere der Ringflansche mit seiner Unterseite die untere Anlagefläche bildet. Indem die Abstandhalter die unterschiedlichen durch die Verbindungsstopfen verbundenen Rammpfähle und Stützbeine auf unterschiedliche Abstände zueinander halten können, ist eine Anpassung an unterschiedliche Rammpfahl-Höhen möglich. Diese Anpassungen des vertikalen Abstandes zwischen oberem und unterem Ringflansch kann auf einfache Weise, z.B. Offshore, vorgenommen werden.

Um während der Installation auftretende Lasten und insbesondere Stöße zu dämpfen, die in vertikaler Richtung von der Tragstruktur über die Stützbeine auf die Rammpfähle ausgeübt werden, weisen die Abstandhalter jeweils mindestens ein Dämpfungselement auf, das in vertikaler Richtung wirkende Stöße dämpft. Beispielsweise können die Dämpfungselemente jeweils eine vertikale Stöße aufnehmende Tellerfeder oder einen bei vertikalen Stößen elastisch und/oder plastisch verformbaren Halbrohrabschnitt aufweisen. Auch können die Dämpfungselemente zumindest teilweise aus einem Elastomerwerkstoff bestehen, der entsprechend eine Dämpfungswirkung aufgrund seiner Elastizität bereitstellt. Die Dämpfungselemente können z.B. auf dem oberen Ringflansch der Abstandhalter angeordnet sein. Die in radialer Richtung angeordneten dünnwandigen Halbrohrabschnitte können sich bei vertikaler Belastung verformen, ähnlich wie Getränkedosen.

Nach einer weiteren Ausgestaltung kann jeweils zwischen einer Innenfläche der Hüllrohre und einer Außenfläche der Rammpfähle und/oder zwischen einer Innenfläche der Rammpfähle und einer Außenfläche der Verbindungsstopfen und/oder zwischen einer Innenfläche der Stützbeine und einer Außenfläche der Verbindungsstopfen zumindest abschnittsweise ein Freiraum bestehen, der mit einem Injektionsmörtel gefüllt ist. Die Freiräume bzw. Abstände können insbesondere zylinderwandförmige Freiräume zwischen den Außenflächen der Verbindungsstopfen und den Innenflächen der vorzugsweise zumindest abschnittsweise rohrförmigen Stützbeine und Rammpfähle bzw. zwischen den Außenflächen der Rammpfähle und den Innenflächen der Hüllrohre bilden. Diese Freiräume können mit Injektionsmörtel (Grouting) verfüllt werden, so dass die jeweiligen die Freiräume begrenzenden Komponenten der Anordnung durch den Mörtel fest miteinander verbunden werden. Auf diese Weise können von der erfindungsgemäßen Verbindung neben vertikalen und horizontalen Kräften insbesondere auch um die Vertikale oder die Horizontale auftretende Drehmomente sowie Torsionsmomente sicher aufgenommen werden. Es ist auch denkbar, eine Schubverzahnung zwischen den Verbindungsstopfen und den Stützbeinen und/oder den Hüllrohren vorzusehen und so die Kraft- bzw. Momentenaufnahme weiter zu verbessern. Dabei können durch die Verbindungsstopfen von außen zugängliche Zuführleitungen verlaufen, über die der Injektionsmörtel zumindest einigen der Freiräume zugeführt werden kann. Die Verbindungsstopfen können insbesondere hohl sein.

Um das Einsetzen der Stopfen in die Rammpfähle bzw. das Aufsetzen der Stützbeine auf die Verbindungsstopfen zu erleichtern, können die Verbindungsstopfen sich an ihren Ober- und Unterseiten jeweils konisch verjüngen.

Die Erfindung löst die Aufgabe außerdem durch ein Verfahren zur Installation einer erfindungsgemäßen Offshore-Anordnung mit den Schritten:
- Bereitstellen der Gründungsstruktur, indem die Hüllrohre mit ihren Stützfüßen auf dem Meeresboden aufgestellt werden und die Rammpfähle durch die Hüllrohre in den Meeresboden getrieben werden,
- Absenken der Verbindungsstopfen in die oberen Enden der Rammpfähle, wobei die Verbindungsstopfen nach dem Absenken nach oben aus den Rammpfählen herausragen, wobei die Verbindungsstopfen jeweils einen Abstandhalter aufweisen, mit dem die durch die Verbindungsstopfen verbundenen Stützbeine und Rammpfähle jeweils auf Abstand zueinander gehalten werden und wobei die Abstandhalter jeweils mindestens ein Dämpfungselement aufweisen, das in vertikaler Richtung wirkende Stöße dämpft,
- Absenken der Stützbeine der Tragstruktur mit ihren unteren Enden auf die aus den Rammpfählen herausragenden Verbindungsstopfen.

Die Rammpfähle werden dabei in an sich bekannter Weise mit Ramm- oder Vibrationshämmern in den Meeresboden getrieben. Die Tragstruktur kann in besonders einfacher Weise schwimmend zum Installationsort transportiert werden, wobei die Stützbeine am Installationsort dann nacheinander auf die Verbindungsstopfen abgesenkt werden. Sie sind also in vertikaler Richtung beweglich, beispielsweise relativ zu einer Plattform der Tragstruktur. Nach dem Bereitstellen der Gründungsstruktur und vor dem Absenken der Verbindungsstopfen können Freiräume zwischen Innenflächen der Hüllrohre und Außenflächen der Rammpfähle mit einem Injektionsmörtel gefüllt werden. Entsprechend können nach dem Absenken der Stützbeine auf die Verbindungsstopfen Freiräume zwischen Innenflächen der Rammpfähle und Außenflächen der Verbindungsstopfen und/oder zwischen Innenflächen der Stützbeine und Außenflächen der Verbindungsstopfen mit einem Injektionsmörtel gefüllt werden. Injektionsmörtel kann den Freiräumen über durch die Verbindungsstopfen verlaufende Zuführleitungen zugeführt werden. Dies vereinfacht das Zuführen des Mörtels.

Die Abstände der Stützbeine zu den Rammpfählen können durch die Abstandhalter individuell gewählt werden, um Toleranzen hinsichtlich der vertikalen Positionen der Rammpfähle auszugleichen. Diese Anpassung kann an Land oder auch auf dem Wasser an dem Installationsort erfolgen, beispielsweise auf einem Versorgungsschiff. Beispielsweise können die die Ringflansche der Abstandhalter verbindenden vertikalen Stützbleche in ihrer Länge angepasst werden. Anschließend werden die Ringflansche und die vertikalen Stützbleche an den Verbindungsstopfen verschweißt und so der Abstand zwischen den oberen und unteren Anlageflächen der Abstandhalter eingestellt. Es können auf diese Weise individuelle Stopfen für jedes Stützbein vorgesehen werden.

Ein Ausführungsbeispiel der Erfindung wird nachfolgend anhand von Figuren näher erläutert. Es zeigen schematisch:
- Fig. 1: eine erfindungsgemäße Offshore-Anordnung in einer perspekti- vischen Ansicht,
- Fig. 2: einen vergrößerten Ausschnitt der Anordnung aus Fig. 1 in einer perspektivischen Vertikalschnittansicht,
- Fig. 3: den Ausschnitt aus Fig. 2 in einer seitlichen Vertikalschnittansicht, und
- Fign. 4 bis 10: seitliche Vertikalschnittansichten von vergrößerten Ausschnitten der Anordnung aus Fig. 1 in unterschiedlichen Montagezuständen.

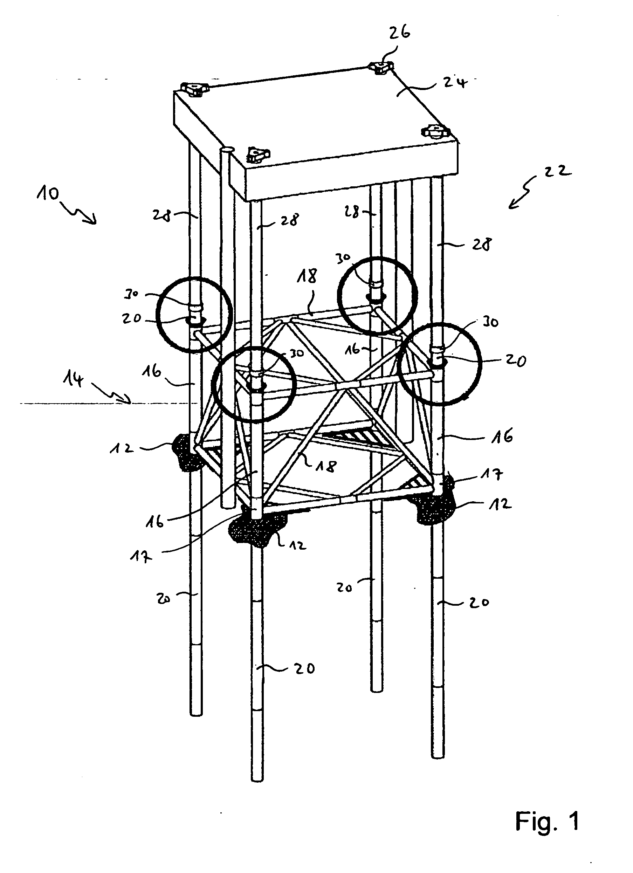

Soweit nichts anderes angegeben ist, bezeichnen in den Figuren gleiche Bezugszeichen gleiche Gegenstände. In Fig. 1 ist eine erfindungsgemäße Offshore-Anordnung 10 dargestellt. Sie besitzt eine auf dem schematisch dargestellten Meeresboden 12 installierte Gründungsstruktur 14. Die Gründungsstruktur 14 besitzt in dem dargestellten Beispiel vier vertikale Hüllrohre 16, die vorliegend in den Ecken eines gedachten Quadrats angeordnet sind. Die vier Hüllrohre 16 sind in an sich bekannter Weise über eine Stützkonstruktion 18 bestehend aus mehreren Verbindungsstreben im Wesentlichen momentensteif miteinander verbunden. Die Hüllrohre 16 stehen jeweils mit einem Stützfuß 17 auf dem Meeresboden 12 auf. Durch jedes der vier Hüllrohre 16 verläuft ein in den Meeresboden getriebener Rammpfahl 20. Die Rammpfähle 20 ragen nach oben über das obere Ende der Hüllrohre 16 hinaus. Die erfindungsgemäße Anordnung 10 besitzt weiterhin eine Tragstruktur 22 mit einer oberhalb des nicht dargestellten Meeresspiegels angeordneten Plattform 24. Auf dieser können in an sich bekannter Weise weitere Bauwerke angeordnet werden, beispielsweise Rohstoffförderanlagen oder auch Windenergieanlagen oder ähnliches. Die Tragstruktur 22 besitzt weiterhin vier mit der Plattform 24 über Verbindungen 26 verbundene Stützbeine 28. Die Stützbeine 28 sind ebenfalls an den Ecken eines gedachten Quadrats angeordnet. Sie sind zylindrisch und koaxial zu den ebenfalls zylindrischen Hüllrohren 16 und Rammpfählen 20 ausgerichtet und jeweils über eine in Fig. 1 zur Veranschaulichung mit Kreisen aufgezeigte Verbindung 30 mit den Rammpfählen 20 verbunden, wie dies unten näher erläutert werden wird. Die Verbindungen 30 befinden sich unterhalb des Meeresspiegels.

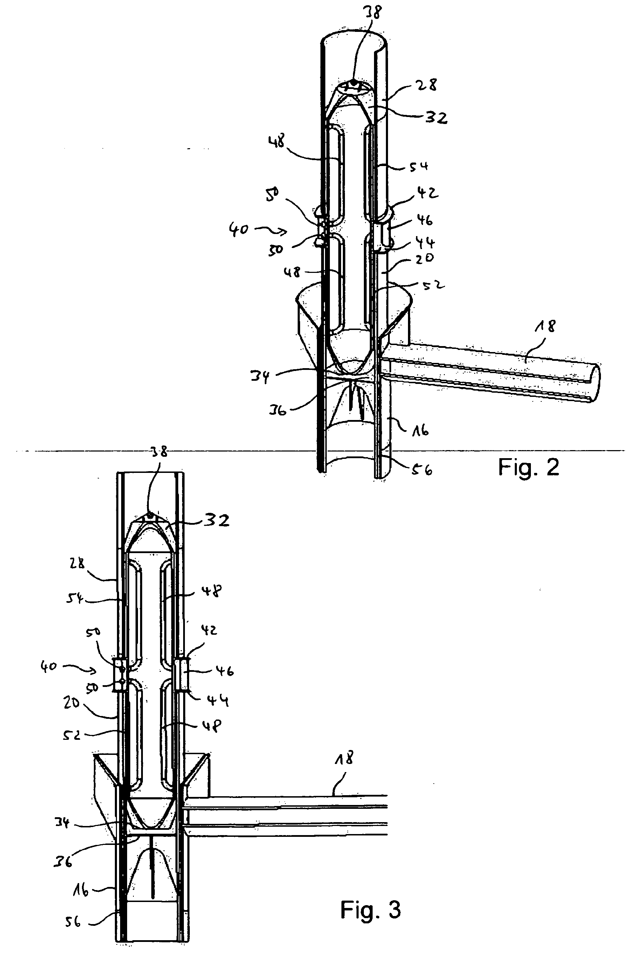

In den Fig. 2 und 3 sind vergrößerte Ausschnitte einer der vier in Fig. 1 gezeigten Verbindungen 30 in zwei vertikalen Schnittansichten dargestellt. Zu erkennen ist dabei ausschnittsweise die Gründungsstruktur 14 (Jacket) mit einem hohlzylindrischen, sich an seinem oberen Ende zur Erleichterung des Einführens des jeweiligen Rammpfahls 20 konisch erweiternden Hüllrohr 16 und einer mit dem Hüllrohr 16 verbundenen horizontalen Verstärkungsstrebe der Stützkonstruktion 18. Ebenfalls zu erkennen ist der durch das Hüllrohr 16 hindurch verlaufende und in den Meeresboden eingetriebene Rammpfahl 20, der mit seinem oberen Ende über die obere Öffnung des Hüllrohrs 16 hinausragt. Weiterhin ist zu erkennen, dass der Rammpfahl 20 zumindest in seinem oberen Abschnitt rohrförmig und nach oben offen ist. Oberhalb des Rammpfahls 20 und konzentrisch zu diesem ausgerichtet befindet sich ein ebenfalls rohrförmiges und nach unten offenes Stützbein 28 der Tragstruktur 22. Die Verbindung zwischen dem Rammpfahl 20 und dem Stützbein 28 und damit zwischen der Gründungsstruktur 14 und der Tragstruktur 22 wird über einen Verbindungsstopfen 32 sichergestellt, der eine hohlzylindrische Grundform besitzt und sich an seinem oberen und unteren Ende jeweils konisch verjüngt. Der Verbindungsstopfen 32 sitzt mit seinem unteren Ende in dem oberen Ende des Rammpfahls 20. Mit einer unteren Spitze 34 befindet sich def Verbindungsstopfen 32 dabei in der Nähe einer Anschlagfläche 36 des Rammpfahls 20. Seine obere Spitze 38 ragt hingegen frei in das Stützbein 28 hinein.

In dem gezeigten Beispiel besitzt der Stopfen 32 einen Abstandhalter 40, mit dem der Rammpfahl 20 und das Stützbein 28 in vertikaler Richtung beabstandet zueinander gehalten werden. Der Abstandhalter 40 ist dabei etwa mittig und umlaufend an der Außenfläche des Verbindungsstopfens 32 angeordnet. Insbesondere besitzt der Abstandhalter 40 in dem gezeigten Beispiel einen oberen von der Außenfläche des Stopfens 32 vorstehenden Ringflansch 42 und einen in Längsrichtung des Stopfens 32 von dem oberen Ringflansch 42 beabstandeten, ebenfalls von der Außenfläche des Stopfens 32 vorstehenden unteren Ringflansch 44. Die Ringflansche 42, 44 sind über mehrere in Längsrichtung des Stopfens 32 verlaufende Schubbleche 46 miteinander verbunden. Der untere Ringflansch 44 bildet mit seiner Unterseite eine untere Anlagefläche, mit der der Stopfen 32 an dem oberen Rand des Rammpfahls 20 anliegt. Gleichzeitig bildet der obere Ringflansch 42 mit seiner Oberseite eine obere Anlagefläche, an der das Stützbein 28 mit seinem unteren Rand anliegt. Obgleich in den Fig. 2 und 3 nur eine der vier Verbindungen 30 aus Fig. 1 gezeigt ist, sind die übrigen drei Verbindungen gleich aufgebaut. Auf diese Weise wird in besonders einfach zu installierender Weise eine sichere Verbindung zwischen der Gründungsstruktur 14 und der Tragstruktur 22 gebildet. Insbesondere werden von den erfindungsgemäßen Verbindungen im Betrieb in vertikaler und horizontaler Richtung auftretende Kräfte sicher übertragen und so beispielsweise von der Tragstruktur 22 über die Gründungsstruktur 14 in den Meeresboden eingeleitet.

Es können dabei in den Figuren nicht näher dargestellte Dämpfungselemente vorgesehen sein, die beispielsweise auf der Oberseite des oberen Ringflansches 42 angeordnet sein können. Mit ihnen können vertikale Stöße gedämpft werden. Außerdem können für die vier Verbindungen 30 der Anordnung 10 individuelle Verbindungsstopfen 32 vorgesehen werden, indem die Abstandhalter 40 an unterschiedliche Rammpfahlhöhen angepasst werden. Dazu können die Ringflansche 42, 44 und die Verstärkungsbleche 46 beispielsweise erst am Installationsort der Anordnung auf dem Wasser an den jeweiligen Verbindungsstopfen 32 angepasst werden. Die Verstärkungsbleche 46 können dazu entsprechend in ihrer Länge angepasst werden, so dass auch die Ringflansche 42, 44 mit unterschiedlichen Abständen in Längsrichtung der Stopfen 32 an diesen angebracht werden können. Die so angepassten Verstärkungsbleche 46 und Ringflansche 42, 44 können dann an den Stopfen 32 verschweißt werden.

Darüber hinaus sind in den Fig. 2 und 3 innerhalb des Verbindungsstopfens 32 verlaufende Zuführleitungen 48 zu sehen. Sie sind über Öffnungen 50 von außen zugänglich. In dem gezeigten Beispiel bestehen zwischen der Innenfläche des Rammpfahls 20 und der in dem Rammpfahl 20 befindlichen Außenfläche des Verbindungsstopfens 32 einerseits und zwischen der Innenfläche des Stützbeins 28 und der innerhalb des Stützbeins 28 befindlichen Außenfläche des Verbindungsstopfens 32 jeweils zylinderwandförmige Freiräume 52, 54, die über die Zuführleitungen 48 mit Unterwasserbeton gefüllt werden können. Außerdem bestehen in dem gezeigten Beispiel zwischen der Innenfläche der Hüllrohre und der innerhalb der Hüllrohre 16 befindlichen Außenfläche der Rammpfähle 20 ebenfalls zylinderwandförmige Freiräume 56. Diese können ebenfalls mit Unterwasserbeton gefüllt werden. Das Einbringen von Injektionsmörtel in diese Freiräume 52, 54, 56 gewährleistet, dass von der erfindungsgemäßen Verbindung auch um die Vertikale oder Horizontale auftretende Momente und insbesondere auch Torsionsmomente sicher aufgenommen und in den Meeresboden übertragen werden können.

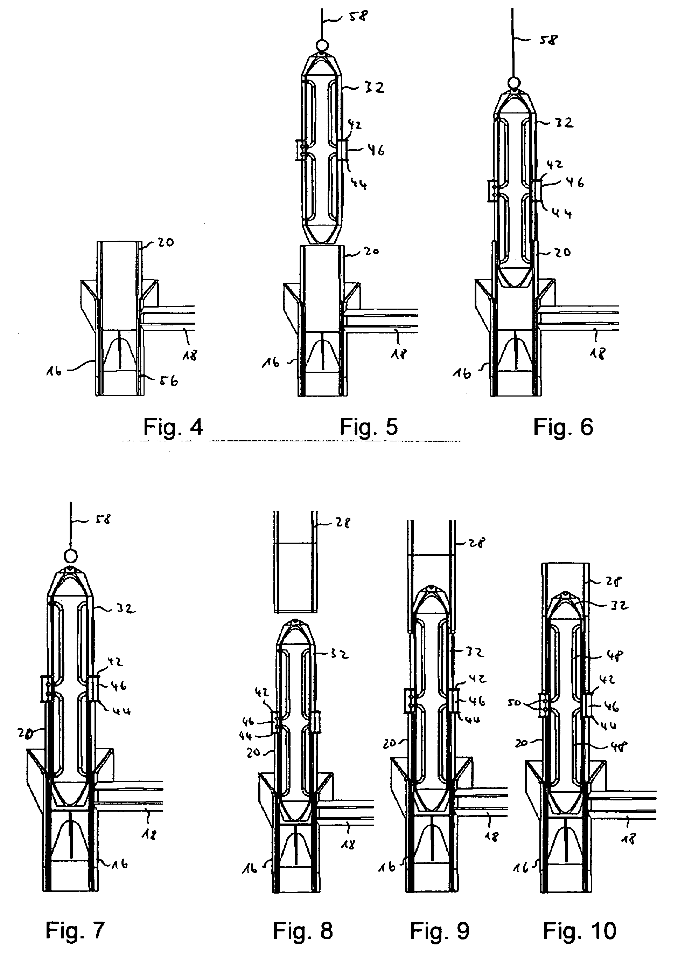

In den Fig. 4 bis 10 sind unterschiedliche Montagezustände ausschnittsweise und jeweils in einem Vertikalschnitt bei der Installation der erfindungsgemäßen Offshore-Anordnung 10 gezeigt. In den Fig. 4 bis 10 ist die Installation beispielhaft für eine der vier Verbindungen zwischen den Stützbeinen 28 und den Hüllrohren 16 bzw. Rammpfählen 20 gezeigt. Die übrigen drei Verbindungen werden in gleicher Weise installiert. In Fig. 4 ist der Zustand nach der Gründung der Gründungsstruktur 14 zu erkennen, bei dem die Rammpfähle 20 beispielsweise mittels Ramm- oder Vibrationshämmern in die auf dem Meeresboden aufstehenden Hüllrohre 16 eingetrieben wurden. Zu diesem Zeitpunkt können die Freiräume 56 zwischen den Hüllrohren 16 und den Rammpfählen 20 mit Injektionsmörtel gefüllt werden. Anschließend wird, wie dies in den Fig. 5 und 6 gezeigt ist, beispielsweise mittels eines Schwimmkrans mit einer geeigneten Hebeeinrichtung 58 der Verbindungsstopfen 32 langsam in das oben offene Ende des jeweiligen Rammpfahls 20 abgesenkt, bis der Stopfen 32 mit dem unteren Ringflansch 44 an dem oberen Rand des Rammpfahls 20 aufliegt, wie dies in Fig. 7 gezeigt ist. In diesem Zustand kann die Hebeeinrichtung 58 des nicht dargestellten Schwimmkrans entfernt werden. Die Tragstruktur 22 ist zwischenzeitlich schwimmend zu dem Installationsort transportiert worden und in eine Position gebracht worden, in der die Stützbeine 28 der Tragstruktur 22 zu den Rammpfählen 20 weitgehend ausgerichtet sind. Anschließend werden die Stützbeine 28 nacheinander auf das aus den Rammpfählen 20 herausstehende obere Ende des jeweiligen Verbindungsstopfens 32 abgesenkt, wie dies in den Fig. 8 und 9 gezeigt ist, bis die Stützbeine 28 jeweils mit ihrem unteren Rand auf der oberen Anlagefläche des oberen Ringflansches 42 des Stopfens 32 anliegen. Dies ist in Fig. 10 dargestellt. In diesem Zustand kann über die Zuführleitungen 48 und die Öffnungen 50 den Freiräumen 52 und 54 zwischen den Innenflächen der Rammpfähle 20 und der Stützbeine 28 sowie den Außenflächen der Verbindungsstopfen 32 ebenfalls Injektionsmörtel zugeführt werden.

Damit ist die erfindungsgemäße Offshore-Anordnung 10 auf dem Meeresboden installiert. Die Installation ist besonders einfach, schnell und damit kostengünstig und stellt gleichzeitig eine sichere Ableitung jeglicher im Betrieb auftretenden Kräfte und Momente von der Tragstruktur in den Meeresboden sicher.

## Patentansprüche

1. Offshore-Anordnung, umfassend eine auf dem Meeresboden installierte Gründungsstruktur (14) mit mindestens drei über eine Stützkonstruktion (18) verbundenen vertikalen Hüllrohren (16), die jeweils mit einem Stützfuß (17) auf dem Meeresboden aufstehen und durch die jeweils ein in den Meeresboden getriebener Rammpfahl (20) verläuft, wobei die Rammpfähle (20) zumindest an ihren oberen Enden hohl ausgebildet sind, weiter umfassend eine zumindest teilweise oberhalb des Meeresspiegels angeordnete Tragstruktur (22) mit mindestens drei zu den Hüllrohren (16) und den Rammpfählen (20) ausgerichteten vertikalen Stützbeinen (28), die zumindest an ihrem unteren Ende ebenfalls hohl sind, wobei die Stützbeine (28) und die in den Hüllrohren (16) verlaufenden Rammpfähle (20) jeweils über einen Verbindungsstopfen (32) miteinander verbunden sind, der mit seinem einen Ende in dem oberen Ende eines Rammpfahls (20) und mit seinem anderen Ende in dem unteren Ende des zu dem Rammpfahl (20) jeweils ausgerichteten Stützbeins (28) steckt und wobei die Verbindungsstopfen (32) jeweils einen Abstandhalter (40) aufweisen, mit dem die durch die Verbindungsstopfen (32) verbundenen Stützbeine (28) und Rammpfähle (20) jeweils auf Abstand zueinander gehalten werden,
**dadurch gekennzeichnet, dass** die Abstandhalter (40) jeweils mindestens ein Dämpfungselement aufweisen, das in vertikaler Richtung wirkende Stöße dämpft.

2. Offshore-Anordnung nach Anspruch 1, **dadurch gekennzeichnet, dass** die Abstandhalter (40) jeweils eine obere in radialer Richtung von dem Verbindungsstopfen (32) vorstehende ringförmige Anlagefläche und eine untere in radialer Richtung von dem Verbindungsstopfen (32) vorstehende ringförmige Anlagefläche aufweisen, wobei die Stützbeine (28) jeweils mit ihrem unteren Ende an der oberen Anlagefläche anliegen und die Rammpfähle (20) jeweils mit ihrem oberen Ende an der unteren Anlagefläche anliegen.

3. Offshore-Anordnung nach Anspruch 2, **dadurch gekennzeichnet, dass** die Abstandhalter (40) jeweils mindestens zwei in Längsrichtung der Verbindungsstopfen (32) beabstandete und über mehrere in Längsrichtung der Verbindungsstopfen (32) verlaufende Verstärkungsrippen (46) verbundene Ringflansche (42, 44) aufweisen, wobei der obere der Ringflansche (42) mit seiner Oberseite die obere Anlagefläche bildet und der untere der Ringflansche (44) mit seiner Unterseite die untere Anlagefläche bildet.

4. Offshore-Anordnung nach einem der vorhergehenden Ansprüche, **dadurch gekennzeichnet, dass** die Abstandhalter (40) die unterschiedlichen durch die Verbindungsstopfen (32) verbundenen Rammpfähle (20) und Stützbeine (28) auf unterschiedliche Abstände zueinander halten.

5. Offshore-Anordnung nach einem der vorhergehenden Ansprüche , **dadurch gekennzeichnet, dass** die Dämpfungselemente jeweils eine vertikale Stöße aufnehmende Tellerfeder oder mehrere in radialer Richtung angeordnete bei vertikalen Stößen elastisch und/oder plastisch verformbaren Halbrohrabschnitte aufweisen.

6. Offshore-Anordnung nach einem der vorhergehenden Ansprüche , **dadurch gekennzeichnet, dass** die Dämpfungselemente zumindest teilweise aus einem Elastomerwerkstoff bestehen.

7. Offshore-Anordnung nach einem der vorhergehenden Ansprüche, **dadurch gekennzeichnet, dass** jeweils zwischen einer Innenfläche der Hüllrohre (16) und einer Außenfläche der Rammpfähle (20) und/oder zwischen einer Innenfläche der Rammpfähle (20) und einer Außenfläche der Verbindungsstopfen (32) und/oder zwischen einer Innenfläche der Stützbeine (28) und einer Außenfläche der Verbindungsstopfen (32) zumindest abschnittsweise ein Freiraum (52, 54, 56) besteht, der mit einem Injektionsmörtel gefüllt ist.

8. Offshore-Anordnung nach Anspruch 7, **dadurch gekennzeichnet, dass** durch die Verbindungsstopfen (32) von außen zugängliche Zuführleitungen (48) verlaufen, über die der Injektionsmörtel zumindest einigen der Freiräume (52, 54, 56) zugeführt werden kann.

9. Offshore-Anordnung nach einem der vorhergehenden Ansprüche, **dadurch gekennzeichnet, dass** die Verbindungsstopfen (32) sich an ihren Ober- und Unterseiten jeweils konisch verjüngen.

10. Verfahren zur Installation einer Offshore-Anordnung (10) nach einem der vorhergehenden Ansprüche, **gekennzeichnet durch** die Schritte:
- Bereitstellen der Gründungsstruktur (14), indem die Hüllrohre (16) mit ihren Stützfüßen (17) auf dem Meeresboden aufgestellt werden und die Rammpfähle (20) **durch** die Hüllrohre (16) in den Meeresboden getrieben werden,
- Absenken der Verbindungsstopfen (32) in die oberen Enden der Rammpfähle (20), wobei die Verbindungsstopfen (32) nach dem Absenken nach oben aus den Rammpfählen (20) herausragen, wobei die Verbindungsstopfen (32) jeweils einen Abstandhalter (40) aufweisen, mit dem die **durch** die Verbindungsstopfen (32) verbundenen Stützbeine (28) und Rammpfähle (20) jeweils auf Abstand zueinander gehalten werden und wobei die Abstandhalter (40) jeweils mindestens ein Dämpfungselement aufweisen, das in vertikaler Richtung wirkende Stöße dämpft,
- Absenken der Stützbeine (28) der Tragstruktur (22) mit ihren unteren Enden auf die aus den Rammpfählen (20) herausragenden Verbindungsstopfen (32).

11. Verfahren nach Anspruch 10, **dadurch gekennzeichnet, dass** nach dem Bereitstellen der Gründungsstruktur (14) und vor dem Absenken der Verbindungsstopfen (32) Freiräume (56) zwischen Innenflächen der Hüllrohre (16) und Außenflächen der Rammpfähle (20) mit einem Injektionsmörtel gefüllt werden.

12. Verfahren nach einem der Ansprüche 10 oder 11, **dadurch gekennzeichnet, dass** nach dem Absenken der Stützbeine (28) Freiräume (52, 54) zwischen Innenflächen der Rammpfähle (20) und Außenflächen der Verbindungsstopfen (32) und/oder zwischen Innenflächen der Stützbeine (28) und Außenflächen der Verbindungsstopfen (32) mit einem Injektionsmörtel gefüllt werden.

13. Verfahren nach Anspruch 12, **dadurch gekennzeichnet, dass** der Injektionsmörtel zumindest einigen der Freiräume (52, 54, 56) über durch die Verbindungsstopfen (32) verlaufende Zuführleitungen (48) zugeführt wird.

## Claims

1. An offshore facility, comprising a foundation structure (14) installed on the sea floor with at least three vertical shell tubes (16) connected via a support construction (18), each of which stands up with a support foot (17) on the sea floor and through each of which runs a ram pile (20) driven into the sea floor, wherein the ram piles (20) are designed hollow at least on their upper ends, further comprising a carrying structure (22) arranged at least partially above the sea level with at least three support legs (28) aligned vertically to the shell tubes (16) and the ram piles (20), which are also hollow at least on their lower end, wherein the support legs (28) and the ram piles (20) running into the shell tubes (16) are each interconnected via a connection plug (32), which sticks with its one end in the upper end of a ram pile (20) and with its other end in the lower end of the ram pile (20) and wherein each of the connection plugs (32) has a spacer (40), with which the support legs (28) and ram piles (20) connected by the connection plugs (32) are each held at a distance from each other,
**characterized in that** the spacers (40) each have at least one damping element, which dampens acting impacts in the vertical direction.

2. The offshore facility according to claim 1, **characterized in that** the spacers (40) each have an upper annular contact surface protruding in the radial direction from the connection plug (32) and a lower annular contact surface protruding in the radial direction from the connection plug (32), wherein the support legs (28) each lie with their lower end against the upper contact surface and the ram piles (20) each lie with their upper end on the bottom contact surface.

3. The offshore facility according to claim 2, **characterized in that** the spacers (40) each have at least two ring flanges (42, 44) spaced in the longitudinal direction of the connection plugs (32) and connected via several reinforcing ribs (46) running in the longitudinal direction of the connection plugs (32), wherein the upper of the ring flanges (42) with its top side forms the upper contact surface and the bottom of the ring flanges (44) with its bottom side forms the bottom contact surface.

4. The offshore facility according to one of the previous claims, **characterized in that** the spacers (40) hold the different ram piles (20) and support legs (28) connected by the connection plugs (32) at different distances with respect to each other.

5. The offshore facility according to one of the previous claims, **characterized in that** the damping elements each have a plate spring receiving vertical impacts or several half-pipe sections elastically and/or plastically malleable in the radial direction in the case of vertical impacts.

6. The offshore facility according to one of the previous claims, **characterized in that** the damping elements are made at least partially of an elastomer material.

7. The offshore facility according to one of the previous claims, **characterized in that** there is at least sectionwise a free space (52, 54, 56), which is filled with an injection mortar, between an inner surface of the shell tube (16) and an outer surface of the ram piles (20) and/or between an inner surface of the ram piles (20) and an outer surface of the connection plugs (32) and/or between an inner surface of the support legs (28) and an outer surface of the connection plugs (32).

8. The offshore facility according to claim 7, **characterized in that** feed lines (48) accessible from outside run through the connection plugs (32), via which the injection mortar can be fed at least to a few of the free spaces (52, 54, 56).

9. The offshore facility according to one of the previous claims, **characterized in that** the connection plugs (32) each taper conically on their top and bottom sides.

10. A method for installing an offshore facility (10) according to one of the previous claims, **characterized by** the steps:
- preparing the foundation structure (14) by placing the shell tubes (16) with its support feet (17) on the sea floor and the ram piles (20) are driven into the sea floor through the shell tubes (16),
- lowering of the connection plugs (32) into the upper ends of the ram piles (20), wherein the connection plugs (32) protrude upwards out of the ram piles (20) after the lowering, wherein the connection plugs (32) each have a spacer (40), with which the support legs (28) and ram piles (20) connected through the connection plugs (32) are each held at a distance from each other and wherein the spacers (40) each have at least one damping element, which dampens acting impacts in the vertical direction,
- lowering of the support legs (28) of the carrying structure (22) with their lower ends onto the connection plugs (32) protruding out of the ram piles (20).

11. The method according to claim 10, **characterized in that** free spaces (56) between inner surfaces of the shell tubes (16) and outer surfaces of the ram piles (20) are filled with an injection mortar after the preparing of the foundation structure (14) and before the lowering of the connection plugs (32).

12. The method according to one of claims 10 or 11, **characterized in that** free spaces (52, 54) between inner surfaces of the ram piles (20) and outer surfaces of the connection plugs (32) and/or between inner surfaces of the support legs (28) and outer surfaces of the connection plugs (32) are filled with an injection mortar after the lowering of the support legs (28).

13. The method according to claim 12, **characterized in that** the injection mortar is fed to at least a few of the free spaces (52, 54, 56) via feed lines (48) running through the connection plugs (32).

## Revendications

1. Agencement en mer, comprenant une structure de fondation (14) installée sur le fond de la mer, avec au moins trois tubes de gainage (16) verticaux, raccordés par le biais d'une construction d'appui (18), qui se dressent sur le fond de la mer respectivement avec un pied d'appui (17) et qui sont respectivement traversés par un pieu battu (20) enfoncé dans le fond de la mer, les pieux battus (20) étant, au moins à leurs extrémités supérieures, constitués de façon creuse, comprenant également une structure porteuse (22) disposée au moins partiellement au-dessus du niveau de la mer, avec au moins trois jambes d'appui (28) verticales alignées sur les tubes de gainage (16) et les pieux battus (20), et qui sont également creuses au moins à leur extrémité inférieure, les jambes d'appui (28) et les pieux battus (20) courant dans les tubes de gainage (16) étant raccordés les uns aux autres respectivement par le biais d'un bouchon de raccordement (32) qui se place par une extrémité dans l'extrémité supérieure d'un pieu battu (20) et, par son autre extrémité, dans l'extrémité inférieure de la jambe d'appui (28) alignée respectivement sur le pieu battu (20), et les bouchons de raccordement (32) présentant respectivement une pièce d'écartement (40) avec laquelle les jambes d'appui (28) et les pieux battus (20) raccordés par les bouchons de raccordement (32) sont maintenus respectivement espacés les uns des autres,
**caractérisé en ce que** les pièces d'écartement (40) présentent respectivement un élément amortisseur qui amortit les chocs agissant dans la direction verticale.

2. Agencement en mer selon la revendication 1, **caractérisé en ce que** les pièces d'écartement (40) présentent respectivement une surface d'appui annulaire supérieure dépassant du bouchon de raccordement (32) dans la direction radiale et une surface d'appui annulaire inférieure dépassant du bouchon de raccordement (32) dans la direction radiale, les jambes d'appui (28) s'appuyant respectivement par leur extrémité inférieure sur la surface d'appui supérieure, et les pieux battus (20) s'appuyant respectivement par leur extrémité supérieure sur la surface d'appui inférieure.

3. Agencement en mer selon la revendication 2, **caractérisé en ce que** les pièces d'écartement (40) présentent respectivement au moins deux brides annulaires (42, 44) espacées dans la direction longitudinale des bouchons de raccordement (32) et raccordées par le biais de plusieurs nervures de renfort (46) courant dans la direction longitudinale des bouchons de raccordement (32), la bride supérieure des brides annulaires (42) formant la surface d'appui supérieure avec son côté supérieur, et la bride inférieure des brides annulaires (44) formant la surface d'appui inférieure avec son côté inférieur.

4. Agencement en mer selon une des revendications précédentes, **caractérisé en ce que** les pièces d'écartement (40) maintiennent à des distances différentes entre eux les différents pieux battus (20) et jambes d'appui (28) raccordés par les bouchons de raccordement (32).

5. Agencement en mer selon une des revendications précédentes, **caractérisé en ce que** les éléments amortisseurs présentent respectivement une rondelle Belleville absorbant les chocs verticaux ou plusieurs segments en demi-tubes disposés dans la direction radiale et déformables élastiquement et/ou plastiquement lors de chocs verticaux.

6. Agencement en mer selon une des revendications précédentes, **caractérisé en ce que** les éléments amortisseurs sont réalisés au moins partiellement en matériau élastomère.

7. Agencement en mer selon une des revendications précédentes, **caractérisé en ce que**, respectivement entre une surface intérieure des tubes de gainage (16) et une surface extérieure des pieux battus (20) et/ou entre une surface intérieure des pieux battus (20) et une surface extérieure des bouchons de raccordement (32) et/ou entre une surface intérieure des jambes d'appui (28) et une surface extérieure des bouchons de raccordement (32), il existe au moins partiellement un espace libre (52, 54, 56) qui est rempli d'un mortier d'injection.

8. Agencement en mer selon la revendication 7, **caractérisé en ce que** les bouchons de raccordement (32) sont traversés par des conduites d'amenée (48) accessibles à partir de l'extérieur et à travers lesquelles le mortier d'injection peut être conduit à au moins quelques-uns des espaces libres (52, 54, 56).

9. Agencement en mer selon une des revendications précédentes, **caractérisé en ce que** les bouchons de raccordement (32) vont respectivement en se rétrécissant en cône sur leurs côtés supérieurs et inférieurs.

10. Procédé d'installation d'un agencement en mer (10) selon une des revendications précédentes, **caractérisé par** les étapes suivantes :
- Mise à disposition de la structure de fondation (14) par le fait que les tubes de gainage (16) sont placés avec leurs pieds d'appui (17) sur le fond de la mer, et les pieux battus (20) sont enfoncés à travers les tubes de gainage (16) dans le fond de la mer ;
- Abaissement des bouchons de raccordement (32) dans les extrémités supérieures des pieux battus (20), les bouchons de raccordement (32) dépassant vers le haut à partir des pieux battus (20) après l'abaissement, les bouchons de raccordement (32) présentant respectivement une pièce d'écartement (40) avec laquelle les jambes d'appui (28) et les pieux battus (20) raccordés par les bouchons de raccordement (32) sont maintenus respectivement espacés les uns des autres, et les pièces d'écartement (40) présentant respectivement au moins un élément amortisseur qui amortit les chocs agissant dans la direction verticale;
- Abaissement des jambes d'appui (28) de la structure porteuse (22) avec ses extrémités inférieures sur les bouchons de raccordement (32) dépassant des pieux battus (20).

11. Procédé selon la revendication 10, **caractérisé en ce que**, après la mise à disposition de la structure de fondation (14) et avant l'abaissement des bouchons de raccordement (32), des espaces libres (56) entre les surfaces intérieures des tubes de gainage (16) et les surfaces extérieures des pieux battus (20) sont remplis d'un mortier d'injection.

12. Procédé selon une des revendications 10 ou 11, **caractérisé en ce que**, après l'abaissement des jambes d'appui (28), des espaces libres (52, 54) entre les surfaces intérieures des pieux battus (20) et les surfaces extérieures des bouchons de raccordement (32) et/ou entre les surfaces intérieures des jambes d'appui (28) et les surfaces extérieures des bouchons de raccordement (32) sont remplis d'un mortier d'injection.

13. Procédé selon la revendication 12, **caractérisé en ce que** le mortier d'injection est conduit à au moins certains des espaces libres (52, 54, 56) par le biais des conduites d'amenée (48) traversant les bouchons de raccordement (32).
